# EUROPEAN PATENT SPECIFICATION

(11) **EP 1 719 787 B1**
(45) Date of publication and mention of the grant of the patent: **04.04.2018**
(21) Application number: 05710240.2
(22) Date of filing: 16.02.2005
(51) Int. Cl.: C08F 285/00, C08L 101/00, C08F 290/06, C09D 5/18

(54) **GRAFT COPOLYMER, FLAME RETARDANT COMPOSED OF SUCH COPOLYMER AND RESIN COMPOSITION CONTAINING SUCH FLAME RETARDANT**
PFROPFCOPOLYMER, FLAMMSCHUTZMITTEL AUS EINEM DERARTIGEN COPOLYMER UND HARZZUSAMMENSETZUNG MIT EINEM DERARTIGEN FLAMMSCHUTZMITTEL
COPOLYMERE GREFFE, IGNIFUGEANT COMPOSE DE CE POLYMERE ET COMPOSITION DE RESINE CONTENANT CET IGNIFUGEANT

(30) Priority: 24.02.2004 JP 2004048786; 24.02.2004 JP 2004048785
(43) Date of publication of application: 08.11.2006
(73) Proprietor: Kaneka Corporation, Osaka (JP)
(72) Inventor: HASHIMOTO, Tomomichi 5-2-23, Torikainishi, Osaka 566-0072 (JP); TONE, Hiroshi 6-31-17, Shioya-cho, Hyogo 655-0872 (JP)
(74) Representative: Vossius & Partner Patentanwälte Rechtsanwälte mbB
(86) International application number: PCT/JP2005/002290
(87) International publication number: WO 2005/080460

(56) References cited:
- EP-A1- 1 746 116
- WO-A1-03/068835
- WO-A1-03/091342
- JP-A- 11 100 481
- JP-A- 11 199 642
- JP-A- 2000 017 029
- JP-A- 2000 017 136
- JP-A- 2002 348 453
- ANDRÉ COLAS: "Silicones: Preparation, Properties and Performance", DOW CORNING, LIFE SCIENCES, 23 September 2005 (2005-09-23), XP055181194,
- CHEN B ET AL: "Cationic Ring Opening Polymerization of Octamethylcyclotetrasiloxane Initiated by Acid Treated Bentonite", CHINESE JOURNAL OF CHEMICAL ENGINEERING, CHEMICAL INDUSTRY PRESS, BEIJING, CN, vol. 15, no. 5, 1 October 2007 (2007-10-01), pages 661-665, XP022856641, ISSN: 1004-9541, DOI: 10.1016/S1004-9541(07)60142-6 [retrieved on 2007-10-01]
- "Silicones", 15 April 2003 (2003-04-15), ENCYCLOPEDIA OF POLYMER SCIENCE AND TECHNOLOGY, WILEY, US, PAGE(S) 765 - 841, XP007918236, * pages 775-776 *

## Description

### TECHNICAL FIELD

The present invention relates to a polyorganosiloxane-containing graft copolymer, a flame retardant composed of the copolymer, and a resin composition that is prepared by compounding the flame retardant with a thermoplastic resin and that has excellent flame retardancy and impact resistance.

### BACKGROUND ART

Polycarbonate resins have excellent impact resistance, heat resistance, electrical characteristics, and the like, and have thus been widely used in electrical and electronic components, office automation (OA) equipment, household goods, and building materials. Polycarbonate resins have higher flame retardancy compared with polystyrene resins and the like. In fields requiring high flame retardancy, for example, electrical and electronic components and OA equipment, the flame retardancy of the polycarbonate resins has been improved by adding various flame retardants. The use of polyorganosiloxane compounds (also called "silicones") as a halogen- or phosphorus-free flame retardant has been proposed. With respect to a known process for producing a flame-retardant resin composition using such a polyorganosiloxane compound, for example, a process for producing a flame-retardant resin by kneading a silicone resin composed of a monoorganopolysiloxane with a non-silicone polymer has been known (for example, see Patent Document 1). The silicone resin has an effect of imparting flame retardancy, but the effect is unsatisfactory. Further addition of the silicone resin to compensate for the unsatisfactory effect impairs the impact resistance of the resulting resin composition. Therefore, there is a problem that it is difficult to produce a flame-retardant resin composition having both excellent flame retardancy and excellent impact resistance.

With respect to a process for producing a flame-retardant resin composition having impact resistance using a polyorganosiloxane compound, for example, a process for producing a flame-retardant resin composition by compounding a thermoplastic resin with specific amounts of a polytetrafluoroethylene and a polyorganosiloxane-containing graft copolymer prepared by graft-polymerizing a vinyl monomer with polyorganosiloxane particles having a particle size of 0.2 µm or less has been known (for example, see Patent Document 2).

On the other hand, a process for producing a latex containing polyorganosiloxane particles has been known which is prepared by emulsion polymerization of a linear or branched siloxane having a terminal group selected from a hydroxyl group, an amino group, or a hydrolyzable group, the latex having a reduced content of volatile siloxane (for example, see Patent Document 3). However, a final product from a polyorganosiloxane-containing graft copolymer prepared with this latex tends to have lower flame retardancy and deteriorated appearance compared with those from the polyorganosiloxane-containing graft copolymer prepared by the process disclosed in Patent Document 2.

Patent Document 4 discloses a graft copolymer obtained by polymerizing 0.5 to 10 parts of a vinyl monomer component comprising 100 to 50 % of a polyfunctional monomer having two or more polymerizable unsaturated bonds in the presence of 40 to 90 parts of polyorganosiloxane particles and then polymerizing 5 to 50 parts of a vinyl monomer in the resulting system; a graft copolymer obtained by polymerizing 0 to 10 parts of a vinyl monomer component comprising 100 to 50 wt % of a polyfunctional monomer having two or more polymerizable unsaturated bonds in the presence of 30 to 95 parts of a polyorganosiloxane latex obtained by seed polymerization wherein a hydrophilic and organosiloxane-swellable polymer is used as the seed and then polymerizing 5 to 70 parts of a vinyl monomer in the resulting system; flame retardants consisting of the graft copolymers; and resin compositions comprising thermoplastic resins and the graft copolymers.

Thus, it has been difficult to strike a balance between the flame retardancy and reducing the volatile siloxane content using only the current techniques.
Patent Document 1: JP 54-36365 A
Patent Document 2: JP 2002-348453 A
Patent Document 3: JP 2001-288269 A
Patent Document 4: WO 03/068835 A1

### DISCLOSURE OF INVENTION

### PROBLEM TO BE SOLVED BY THE INVENTION

It is an object of the present invention to provide a polyorganosiloxane-containing graft copolymer that contains less amount of a residual volatile siloxane causing a material loss and a reduction in productivity during the production and has the excellent effects of improving flame retardancy and impact resistance; a flame retardant composed of the graft copolymer; and a resin composition containing the flame retardant, the resin composition having excellent flame retardancy, appearance, and impact resistance.

### MEANS FOR SOLVING THE PROBLEMS

The present inventors have conducted extensive studies on the problems and found that a polyorganosiloxane-containing graft copolymer prepared by graft-polymerizing a vinyl monomer with a polyorganosiloxane in a latex form prepared by emulsion polymerization of a linear or branched siloxane having a terminal group selected from a hydroxyl group, an amino group, or a hydrolyzable group has less amount of a volatile siloxane; the polyorganosiloxane-containing graft copolymer is useful as a flame retardant; and a thermoplastic resin composition containing the flame retardant has excellent flame retardancy and impact resistance. The findings have led to the completion of the present invention.

That is, the present invention relates to a polyorganosiloxane-containing graft copolymer prepared by polymerizing 0.5 to 10 parts by weight of a vinyl monomer (D) comprising 100 to 50 percent by weight of a polyfunctional monomer (B) containing at least two polymerizable unsaturated bonds and 0 to 50 percent by weight of another copolymerizable monomer (C) in the presence of 30 to 95 parts by weight of a polyorganosiloxane (A) in a latex form prepared by emulsion polymerization of a linear or branched siloxane having a terminal group selected from a hydroxyl group, an amino group, and a hydrolyzable group using a graft linking agent; and further polymerizing 5 to 70 parts by weight of a vinyl monomer (E) (the sum of (A), (D), and (E) being 100 parts by weight), wherein a radical initiator (F) having a solubility to water of 0.5 g/100 g (20°C) or more is used in polymerizing the (D) and/or the (E).

A preferred embodiment relates to the polyorganosiloxane-containing graft copolymer wherein the amount of the vinyl monomer (D) is 0.5 to 5 parts by weight.

According to still another preferred embodiment, the polyorganosiloxane-containing graft copolymer is characterized in that the vinyl monomer (E) is at least one monomer selected from the group consisting of an aromatic vinyl monomer, a vinyl cyanide monomer, a (meth)acrylate monomer, and a carboxyl group-containing vinyl monomer.

The present invention further relates to a flame retardant comprising the polyorganosiloxane-containing graft copolymer.

The present invention still further relates to a resin composition in which 0.1 to 20 parts by weight of the flame retardant is compounded with 100 parts by weight of a thermoplastic resin.

### THE EFFECT OF THE INVENTION

The present invention can reduce the content of a residual volatile siloxane causing a material loss and a reduction in productivity in producing, and can provide a flame retardant that has the effects of improving flame retardancy, appearance, and impact resistance of a thermoplastic resin composition; and a flame-retardant resin composition, which has excellent flame retardancy, appearance, and impact resistance, prepared by compounding the flame retardant with a thermoplastic resin.

### BEST MODE FOR CARRYING OUT THE INVENTION

A polyorganosiloxane-containing graft copolymer of the present invention is prepared by polymerizing 0.5 to 10 parts by weight of a vinyl monomer (D) comprising 100 to 50 percent by weight of a polyfunctional monomer (B) containing at least two polymerizable unsaturated bonds and 0 to 50 percent by weight of another copolymerizable monomer (C) in the presence of 30 to 95 parts by weight of a polyorganosiloxane (A) in a latex form prepared by emulsion polymerization of a linear or branched siloxane having a terminal group selected from a hydroxyl group, an amino group, and a hydrolyzable group using a graft linking agent: and further polymerizing 5 to 70 parts by weight of a vinyl monomer (E) (the sum of (A). (D), and (E) being 100 parts by weight), wherein a radical initiator (F) having a solubility to water of 0.5 g/100 g (20°C) or more is used in polymerizing the (D) and/or the (E). The polyorganosiloxane-containing graft copolymer is useful as a flame retardant. A thermoplastic resin composition containing the flame retardant exhibits excellent flame retardancy and impact resistance.

A polyorganosiloxane used in the present invention can be obtained by a known process disclosed in JP 2001-288269 A, JP 11-222554 A. Emulsion polymerization of a polyorganosiloxane can be performed as follows: water, a surfactant, are added to a (modified) dimethylpolysiloxane which has a weight-average molecular weight of, for example, 10,000 or less, preferably 5,000 or less, and more preferably 3,000 or less, has a terminal group such as a hydroxyl group, an amino group, or a hydrolyzable group such as an alkoxyl group and, if necessary, is partially substituted with a methacryloyloxypropyl group in the presence of a common graft-linking agent. The resulting mixture is subjected to mechanically forced emulsification with, for example, a high-pressure homogenizer so that the resulting emulsion has a desired particle size, to be emulsified and dispersed in water, and is then adjusted to an acidic condition.

A graft-linking agent is used in polymerization of a polyorganosiloxane used in the present invention. If necessary, a crosslinking agent can also be used.

A common graft-linking agent may be used. Preferably, a bifunctional silane compound containing a polymerizable vinyl group is used. For the use of a tri- or more functional silane compound containing a polymerizable vinyl group, a final molded product may have low impact resistance. Examples of the graft-linking agent include γ-methacryloyloxypropyldimethoxymethylsilane, γ-methacryloyloxypropyldiethoxymethylsilane, γ-acryloyloxypropyldimethoxymethyl silane, and 3-mercaptopropylmethyldimethoxysilane. The graft-linking agent is used in an amount of preferably 0.1 to 10 percent by weight, more preferably 0.5 to 7 percent by weight, and most preferably 1 to 5 percent by weight based on the amount of organosiloxane. When the amount of graft-linking agent used exceeds 10 percent by weight, a final molded product may have reduced flame retardancy and impact resistance. When the amount of graft-linking agent used is below 0.1 percent by weight, moldability of a final molded product may be reduced.

If necessary, a crosslinking agent may be added in preparing a polyorganosiloxane (A) used in the present invention. Examples of the crosslinking agent include trifunctional crosslinking agents such as methyltrimethoxysilane, phenyltrimethoxysilane, and ethyltriethoxysilane; and tetrafunctional crosslinking agents such as tetraethoxysilane, 1,3-bis[2-(dimethoxymethylsilyl)ethyl]benzene, 1,4-bis[2-(dimethoxymethylsilyl)ethyl]benzene, 1,3-bis[1-(dimethoxymethylsilyl)ethyl]benzene, 1,4-bis[1-(dimethoxymethylsilyl)ethyl]benzene, 1-[1-(dimethoxymethylsilyl)ethyl]-3-[2-(dimethoxymethylsilyl)ethyl]benzene, and 1-[1-(dimethoxymethylsilyl)ethyl]-4-[2-dimethoxymethylsilyl)ethyl]benzene. These crosslinking agents may be used alone. A mixture containing at least two agents may also be used. The crosslinking agent is added in an amount of preferably 10 percent by weight or less, more preferably 3.0 percent by weight or less, based on the amount of polyorganosiloxane (A). In the case that the amount of the crosslinking agent is above 10 percent by weight, a final molded product may have reduced impact resistance due to deterioration of the flexibility of the polyorganosiloxane (A).

In the above-described emulsion polymerization, an emulsifier which does not lose its emulsifying ability under an acidic condition is used. Specific examples thereof include alkylbenzenesulfonic acid, sodium alkylbenzenesulfonate, alkylsulfonic acid, sodium alkylsulfonate, sodium (di)alkylsulfosuccinate, sodium polyoxyethylene nonylphenyl ether sulfonate, and sodium alkylsulfate. These may be used alone or in combination of two or more species thereof. Among these, alkylbenzenesulfonic acid, sodium alkylbenzenesulfonate, alkylsulfonic acid, sodium alkylsulfonate, and sodium (di)alkylsulfosuccinate are preferable due to relatively high emulsion stability. Furthermore, alkylbenzenesulfonic acid and alkylsulfonic acid each function as a polymerization catalyst for a component for forming a polyorganosiloxane.

The reaction system is adjusted to an acidic condition by adding an inorganic acid such as sulfuric acid or hydrochloric acid; or an organic acid such as alkylbenzenesulfonic acid, alkylsulfonic acid, or trifluoroacetic acid. The pH is adjusted to preferably 1 to 3, more preferably 1.0 to 2.5, so that production equipment is not corroded and an appropriate polymerization rate can be obtained.

The polymerization temperature is preferably 0°C or higher, more preferably 15°C or higher, and most preferably 25°C or higher, in view that an appropriate polymerization rate can be obtained. Furthermore, the polymerization temperature is preferably 100°C or lower, more preferably 70°C or lower, and most preferably 50°C or lower. Polymerization temperatures of less than 0°C tend to cause a reduction in productivity and are thus not preferable. Polymerization temperatures of more than 100°C tend to increase a volatile siloxane and are thus not preferable.

Since the polyorganosiloxane-forming reaction is an equilibrium reaction under acidic conditions, the siloxane chains are preferably stabilized as follows: After completion of polymerization under acidic conditions, if necessary, the resulting product is aged at about room temperature for several hours or more to increase the molecular weight of the polyorganosiloxane. Then, the reaction system is neutralized by adding an aqueous alkali solution of sodium hydroxide, potassium hydroxide, or sodium carbonate, so that the pH of the system is adjusted to 5 to 8, to terminate the polymerization.

The polyorganosiloxane (A) in a latex form has an average particle size of preferably 0.008 to 0.6 µm, more preferably 0.01 to 0.4 µm. It is often difficult to stably obtain a latex having an average particle size of less than 0.008 µm. A latex having an average particle size of more than 0.6 µm may cause reductions in the flame retardancy and impact resistance of a final molded product and is thus not preferable.

The vinyl monomer (D) is composed of 100 to 50 percent by weight, preferably 100 to 80 percent by weight, of a polyfunctional monomer (B) containing at least two polymerizable unsaturated bonds per molecule and 0 to 50 percent by weight, preferably 0 to 2O percent by weight, of another copolymerizable monomer (C). Both excessively small amounts of the polyfunctional monomer (B) and excessively large amounts of the copolymerizable monomer (C) result in a tendency to reduce the effect of improving the flame retardancy and impact resistance of the graft copolymer finally obtained and are thus not preferable.

Specific examples of the polyfunctional monomer (B) include allyl methacrylate, triallyl cyanurate, triallyl isocyanurate, diallyl phthalate, ethylene glycol dimethacrylate, 1,3-butylene glycol dimethacrylate, and divinylbenzene. These may be used alone or in combination of two or more species thereof. Among these, allyl methacrylate is particularly preferable due to economy and effect.

The vinyl monomer (D) is used in an amount of 0.5 to 10 parts by weight,
preferably 0.5 to 5 parts by weight. More than 10 parts by weight of the vinyl monomer (D) result in a tendency to reduce the flame retardancy and impact resistance and are thus not preferable.

Use of the vinyl monomer (D) is preferable from the standpoint of the effects of improving flame retardancy and appearance.

When a linear siloxane having a high molecular weight is used as a raw material, since a graft-linking agent for forming reactive sites to a vinyl monomer is not uniformly introduced into the molecules of the siloxane, the amount of vinyl monomer (E) covering the polyorganosiloxane particles (A) is reduced compared with the case in which a cyclic siloxane having a low molecular weight is used as a raw material. As a result, a final molded product of the resulting graft copolymer compounded with a thermoplastic resin tends to have low flame retardancy. However, use of the vinyl monomer (D) principally composed of a polyfunctional monomer having at least two unsaturated bonds compensates for deficient reactive sites, thus improving the flame retardancy and appearance of a final molded product.

Specific examples of the copolymerizable monomer (C) include aromatic vinyl monomers such as styrene, α-methylstyrene, p-methylstyrene, and p-butylstyrene; vinyl cyanide monomers such as acrylonitrile and methacrylonitrile; (meth)acrylate monomers such as methyl acrylate, ethyl acrylate, propyl acrylate, butyl acrylate, 2-ethylhexyl acrylate, glycidyl acrylate, hydroxyethyl acrylate, hydroxybutyl acrylate, methyl methacrylate, ethyl methacrylate, butyl methacrylate, lauryl methacrylate, glycidyl methacrylate, and hydroxyethyl methacrylate; and carboxyl group-containing vinyl monomers such as itaconic acid, (meth)acrylic acid, fumaric acid, and maleic acid. These monomers may be used alone or in combination of two or more species thereof.

The vinyl monomer (E) used in the present invention is a component for ensuring compatibility between the graft copolymer and the thermoplastic resin, thus uniformly dispersing the graft copolymer into the thermoplastic resin. Specific examples of the monomer include the same compounds as those used as another copolymerizable monomer (C) in the vinyl monomer (D). Specific examples thereof include aromatic vinyl monomers such as styrene, α-methylstyrene, p-methylstyrene, and p-butylstyrene; vinyl cyanide monomers such as acrylonitrile and methacrylonitrile; (meth)acrylate monomers such as methyl acrylate, ethyl acrylate, propyl acrylate, butyl acrylate, 2-ethylhexyl acrylate, glycidyl acrylate, hydroxyethyl acrylate, hydroxybutyl acrylate, methyl methacrylate, ethyl methacrylate, butyl methacrylate, lauryl methacrylate, glycidyl methacrylate, and hydroxyethyl methacrylate; and carboxyl group-containing vinyl monomers such as itaconic acid, (meth)acrylic acid, fumaric acid, and maleic acid. These may be used alone or in combination of two or more species thereof. The vinyl monomer (E) is used in an amount of 5 to 70 parts by weight and preferably 5 to 45 parts by weight. In this case, the polyorganosiloxane (A) is preferably used in an amount of 55 to 95 parts by weight.

Polymerization of the vinyl monomer (D) and vinyl monomer (E) used in the present invention is preferably radical polymerization. Furthermore, each of the vinyl monomer (D) and vinyl monomer (E) may be polymerized in a single step or two or more steps.

The vinyl monomers are polymerized not only on the surfaces of the polyorganosiloxane particles, but also inside the particles. To ensure compatibility with the thermoplastic resin with minimum amounts of monomers, the monomers are preferably polymerized on the surfaces of the particles. However, use of a radical initiator having high hydrophobicity results in an increase in the ratio of the amount of the vinyl monomer polymerized inside the particles, thus reducing flame retardancy of the final molded product. Accordingly, for use of the above-described graft-linking agent, selective use of a radical initiator having relatively high water solubility results in a reduction in the amount of each vinyl monomer polymerized in the particles and an increase in the ratio of polymerization on the surfaces of the particles, thus improving the flame retardancy.

Specific examples of the radical initiator (F) include organic peroxides such as cumene hydroperoxide, tert-butyl hydroperoxide, benzoyl peroxide, tert-butyl peroxyisopropylcarbonate, di-tert-butyl peroxide, tert-butyl peroxylaurate, lauroyl peroxide, succinic acid peroxide, cyclohexanone peroxide, acetylacetone peroxide, and p-menthane hydroperoxide; inorganic peroxides such as potassium persulfate and ammonium persulfate; and azo compounds such as 2,2'-azobisisobutyronitrile and 2,2'-azobis-2,4-dimethylvaleronitrile. Among these, the peroxide compounds such as the organic peroxides or inorganic peroxides are preferable because of high reactivity. In particular, compounds having a water solubility equal to or more than that of p-menthane hydroperoxide and cumene hydroperoxide are more preferable.

A radical initiator (F) having a solubility to water of 0.5 g/100 g (20°C) or more and preferably 1 to 16 g/100 g (20°C) is used. Compounding a copolymer obtained using such an initiator with a thermoplastic resin results in a tendency to improve the flame retardancy of a final molded product.

Specific examples of the radical initiator (F) having a solubility to water of 0.5 g/100 g (20°C) or more include p-menthane hydroperoxide, tert-butyl hydroperoxide, potassium persulfate, cumene hydroperoxide, and tert-hexyl hydroperoxide. These may be used alone or in combination of two or more species thereof.

The amount of the radical initiator used is in a range known to those skilled in the art.

Performing the polymerization in a redox system including ferrous sulfate-sodium formaldehyde sulfoxylate-disodium ethylenediaminetetraacetate, ferrous sulfate-glucose-sodium pyrophosphate, or ferrous sulfate-sodium pyrophosphate-sodium phosphate results in completion of the polymerization even at lower polymerization temperature and is thus preferable.

An example of a process for isolating the polymer from the graft-copolymer latex prepared by emulsion polymerization is as follows: The latex is coagulated by adding a metal salt, such as calcium chloride, magnesium chloride, or magnesium sulfate and then the coagulated product is separated, washed, dehydrated, and dried. Spray drying may also be used.

The graft copolymer thus prepared is useful as a flame retardant. Flame-retardant resin compositions having excellent flame retardancy and impact resistance can be obtained by compounding the graft copolymer with various thermoplastic resins.

A polycarbonate resin containing 50 percent by weight or more of polycarbonate is preferably used as the above-described thermoplastic resin from the standpoint of excellent flame retardancy. Preferable examples of the polycarbonate resin include a polycarbonate; polycarbonate/polyester mixed resins such as a polycarbonate/polyethylene terephthalate mixed resin and a polycarbonate/polybutylene terephthalate mixed resin; polycarbonate/ (acrylonitrile-styrene copolymer) mixed resins; polycarbonate/(butadiene-styrene copolymer) (high-impact polystyrene (HIPS) resin) mixed resins; polycarbonate/(acrylonitrile-butadiene rubber-styrene copolymer) (ABS resin) mixed resins; polycarbonate / (acrylonitrile-butadiene rubber-α-methylstyrene copolymer) mixed resins; polycarbonate/(styrene-butadiene rubber-acrylonitrile-N-phenylmaleimide copolymer) mixed resins; and polycarbonate/(acrylonitrile-acrylic rubber-styrene copolymer) (AAS resin) mixed resins.

With respect to the amount of polyorganosiloxane-containing graft copolymer added to the thermoplastic resin, preferably 0.1 to 20 parts by weight, and more preferably 0.1 to 10 parts by weight of the polyorganosiloxane-containing graft copolymer is compounded per 100 parts by weight of the thermoplastic resin from the viewpoint of flame retardancy. Less than 0.1 part by weight of the polyorganosiloxane-containing graft copolymer results in difficulty in improving the flame retardancy of the final molded product and is thus not preferable. More than 20 parts by weight of the polyorganosiloxane-containing graft copolymer may cause a significant reduction in moldability (particularly, fluidity) of the mixture resin for a molded product and is thus not preferable.

The thermoplastic resin and a powdered flame retardant composed of the polyorganosiloxane-containing graft copolymer prepared by coagulating, heat-treating, dehydrating, and drying from the latex can be mixed with a Henschel mixer, a ribbon blender or the like and then melt-kneaded with a roll mill, an extruder, or a kneader.

In this case, additives that are usually used, for example, an antioxidant, an antidripping agent, a polymer-processing aid, a flame retardant, an impact modifier, a plasticizer, a lubricant, an ultraviolet absorber, a pigment, glass fiber, filler, and a polymer lubricant, can be compounded.

As a process for molding the flame-retardant resin composition, a common process for molding a thermoplastic resin composition, i.e., injection molding, extrusion, blow molding, calendaring, or the like, can be applied.

The resulting molded product has excellent impact resistance and flame retardancy.

### EXAMPLES

The present invention will be specifically described based on Examples. These Examples do not limit the scope of the invention. Measurements and tests in Examples and Comparative Examples were performed as follows.

### [Polymerization conversion]

A latex was dried at 120°C for 1 hour in a hot-air dryer to measure the solid content. Polymerization conversion was calculated by formula: 100 × (solid content) / (amount of monomers fed) (%).

### [Volume-average particle size]

Volume-average particle sizes of a seed polymer, polyorganosiloxane particles, and a graft copolymer were measured in the form of latex. The volume-average particle size (µm) was measured by a light scattering method with Microtrac UPA (manufactured by Leed & Northrup Instruments).

### [Volatile-siloxane content]

A volatile-siloxane content was determined by gas chromatographic (GC) analysis. Methyl ethyl ketone was added to a latex, a resin slurry, or a powder, and then extraction was performed. Octamethyltrisiloxane was added as an internal standard. A column (packed with Silicone DC-550, 20 wt % chromosorb WNAW #60-80) having an inner diameter of 3 mm and a length of 3 m was used, and measurements were performed with a gas chromatograph GC-14B (manufactured by Shimadzu Corporation). The amounts of octamethyltetracyclosiloxane (D4), decamethylcyclopentasiloxane (D5), and dodecamethylcyclohexasiloxane (D6) were determined by analysis. The ratio of the total amount of those compounds (D4 to D6) to a resin solid content is defined as a volatile-siloxane content.

### [Impact resistance]

Impact resistance was evaluated by Izod test with a 0.32 cm (1/8 inch) notched bar at 0°C according to ASTM D256.

### [Flame retardancy]

Flame retardancy was evaluated according to UL94V test.

### [Appearance]

Appearance was examined based on the size of a rough area generated at the gate portion of the molded product.
Good: a rough area of less than 1 cm².
Poor: a rough area of 1 cm² or more.

### PRODUCTION EXAMPLE 1

A mixture containing 200 parts by weight of pure water, 1 part by weight of sodium dodecylbenzenesulfonate (SDBS), 1 part by weight of dodecylbenzenesulfonic acid (DBSA), 100 parts by weight of a hydroxyl-terminated organopolysiloxane containing 0.7 percent by weight of a cyclic, low-molecular weight siloxane having 10 or less silicon atoms (DHPDMS) (trade name: PRX413, manufactured by Shin-Etsu Chemical Co., Ltd.), and 5 parts by weight of γ-methacryloxypropylmethyldimethoxysilane (DSMA) was stirred at 10,000 rpm for 5 minutes with a homomixer and passed through a high-pressure homogenizer three times under a pressure of 500 bar to prepare a siloxane emulsion. This siloxane emulsion was immediately fed into a five-necked flask equipped with a reflux condenser, an inlet for nitrogen, an inlet for adding a monomer, and a thermometer in a single operation. The system was allowed to react at 30°C for 6 hours under stirring and cooled to 23°C. After the resulting system was left standing for 20 hours, the pH was adjusted to 6.8 with sodium hydroxide to terminate polymerization, thus yielding a latex containing polyorganosiloxane particles (SR-1). With respect to the resulting polyorganosiloxane latex, the polymerization conversion was 96 %, the volatile-siloxane content was 4.4 %, and the volume-average particle size was 0.28 µm.

### PRODUCTION EXAMPLE 2

A latex containing polyorganosiloxane latex particles (SR-2) was prepared in the same manner as in Production Example 1, except that the graft-linking agent was changed to mercaptopropyldimethoxymethylsilane (MPrDMS). With respect to the resulting polyorganosiloxane latex, the polymerization conversion was 96 %, the volatile-siloxane content was 4.1 %, and the volume-average particle size was 0.28 µm.

### PRODUCTION EXAMPLE 3

A mixture containing 300 parts by weight of pure water, 0.5 part by weight (on solid basis) of sodium dodecylbenzenesulfonate (SDBS), 100 parts by weight of octamethylcyclotetrasiloxane (D4), and 5 parts by weight of y-methacryloxypropylmethyldimethoxysilane (DSMA) was stirred at 7,000 rpm for 5 minutes with a homomixer to prepare an emulsion. The resulting siloxane emulsion was immediately fed into a five-necked flask equipped with a reflux condenser, an inlet for nitrogen, an inlet for adding a monomer, and a thermometer in a single operation.

Next, 1 part by weight (on solid basis) of a 10 % dodecylbenzenesulfonic acid aqueous solution was added and the resulting mixture was heated to 80°C with stirring under nitrogen flow. The stirring was continued at 80°C for 15 hours, and the mixture was cooled to 25°C and then left standing for 30 hours. Then, the pH was adjusted to 6.5 with sodium hydroxide to terminate polymerization, thus yielding a polyorganosiloxane latex (SR-3). With respect to the resulting polyorganosiloxane latex, the polymerization conversion was 85 %, the volatile-siloxane content was 15 %, and the volume-average particle size was 0.20 µm.

### PRODUCTION EXAMPLE 4

A latex containing polyorganosiloxane latex particles (SR-4) was prepared in the same manner as in Production Example 3, except that the graft-linking agent was changed to mercaptopropyldimethoxymethylsilane (MPrDMS). With respect to the resulting polyorganosiloxane latex, the polymerization conversion was 86 %, the volatile-siloxane content was 14 %, and the volume-average particle size was 0.18 µm.

### EXAMPLES 1 to 12 and COMPARATIVE EXAMPLES 1 to 6

First, 70 or 80 parts by weight (on solid basis) of polyorganosiloxane particles in the form of a latex obtained in Production Examples 1 to 4 were fed into a five-necked flask equipped with a stirrer, a reflux condenser, an inlet for nitrogen, an inlet for adding a monomer, and a thermometer and heated to 60°C with stirring under nitrogen flow. After the temperature reached 60°C, 0.13 part by weight of sodium formaldehyde sulfoxylate (SFS), 0.004 part by weight of disodium ethylenediaminetetraacetate (EDTA), and 0.001 part by weight of ferrous sulfate were added. Allyl methacrylate (ALMA) and a radical initiator (RY-0 to RY-4) shown in Table 1 were mixed in the amounts (parts by weight) shown in Table 2. This mixture was added to the reaction system in a single operation, and then the resulting reaction system was stirred at 60°C for 1 hour. Next, 30 or 20 parts by weight of methyl methacrylate (MMA) and the radical initiator (RY-0 to RY-4) shown in Table 1 in the amounts (parts by weight) shown in Table 2 were mixed. The resulting mixture was added dropwise to the reaction system. After the addition, stirring was continued to yield a graft copolymer latex. The polymerization conversion, the volatile-siloxane content, and the volume-average particle size of the resulting graft copolymer latex are shown in Table 2. Subsequently, the latex was diluted with pure water so that the solid content was adjusted to 15 %, and then 4 parts by weight (on solid basis) of a 2.5 % calcium chloride aqueous solution was added to form a coagulated slurry. The coagulated slurry was heated to 95°C, cooled to 50°C, and then dehydrated and dried to yield a powder of a polyorganosiloxane-containing graft copolymer (SG-1 to SG-11).

The graft copolymer latices shown in Comparative Examples 1 to 6 were prepared not with a linear or branched siloxane having a terminal group selected from a hydroxyl group, an amino group, and a hydrolyzable group, but with a cyclic siloxane. It was found that the graft copolymer latices obtained had high volatile-siloxane contents.

### EXAMPLES 13 to 24 and COMPARATIVE EXAMPLE 7 to 9

A polycarbonate resin (trade name: Panlite L1225WX, manufactured by Teijin Chemicals Ltd.), polytetrafluoroethylene (trade name: POLYFLON FA-500, manufactured by Daikin Industries, Ltd.) as an antidripping agent, and the powder of the polyorganosiloxane-containing graft copolymer shown in Table 2 were compounded in the amounts shown in Table 3.

Each of the resulting mixtures was melt-kneaded at 270°C with a twin-screw extruder (TEX44SS manufactured by The Japan Steel Works, Ltd.) to produce pellets. The resulting pellets were molded with an injection molding machine (FAS100B manufactured by FANUC LTD.) at a cylinder temperature of 280°C to form 0.13 cm (1/20 inch) specimens for evaluating flame retardancy and 0.32 cm (1/8 inch) specimens for evaluating impact resistance. The produced specimens were evaluated according to the above-described evaluation methods. Table 3 shows the results of the flame retardancy and impact resistance of the molded products.

**TABLE 1**

| | Radical initiator | Solubility to water at 20°C (g/100 g water) | Molecular weight |
|---|---|---|---|
| p-Menthane hydroperoxide | RY-0 | 1.6 | 172 |
| tert-Butyl hydroperoxide | RY-1 | 15.7 | 90 |
| Cumene hydroperoxide | RY-2 | 1.6 | 152 |
| tert-Butyl peroxyisopropylmonocarbonate | RY-3 | 0.02 | 176 |
| tert-Hexyl peroxyisopropylmonocarbonate | RY-4 | 0.01 | 204 |

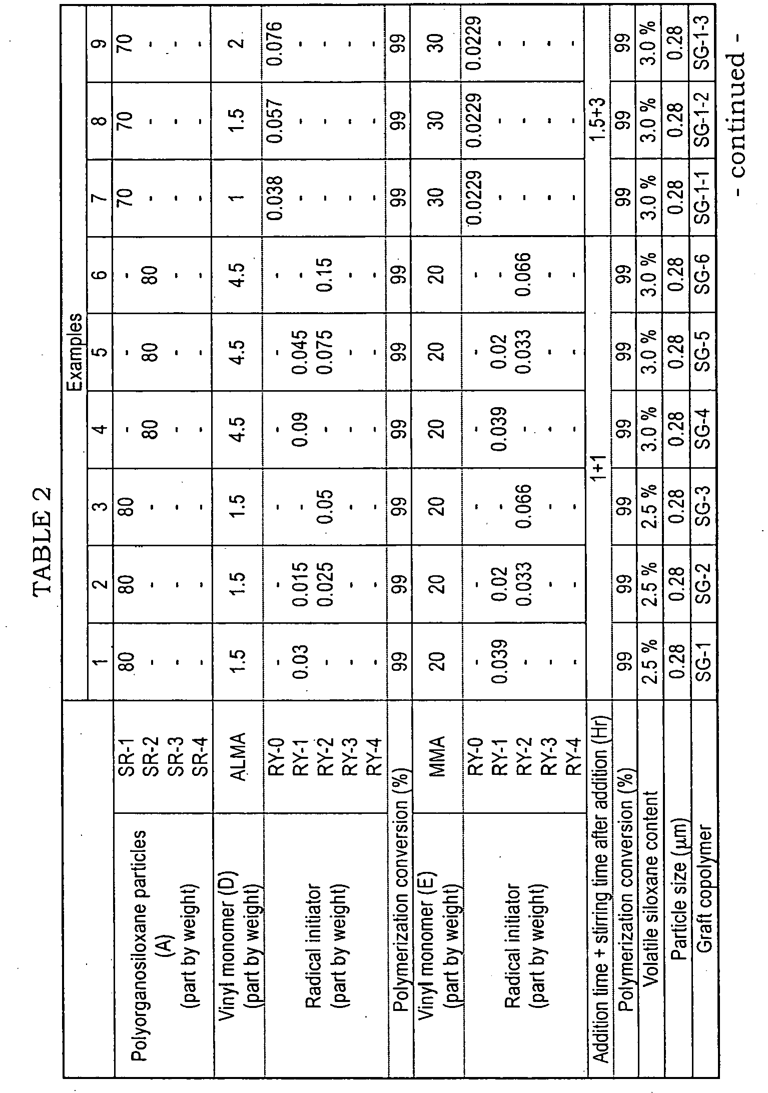

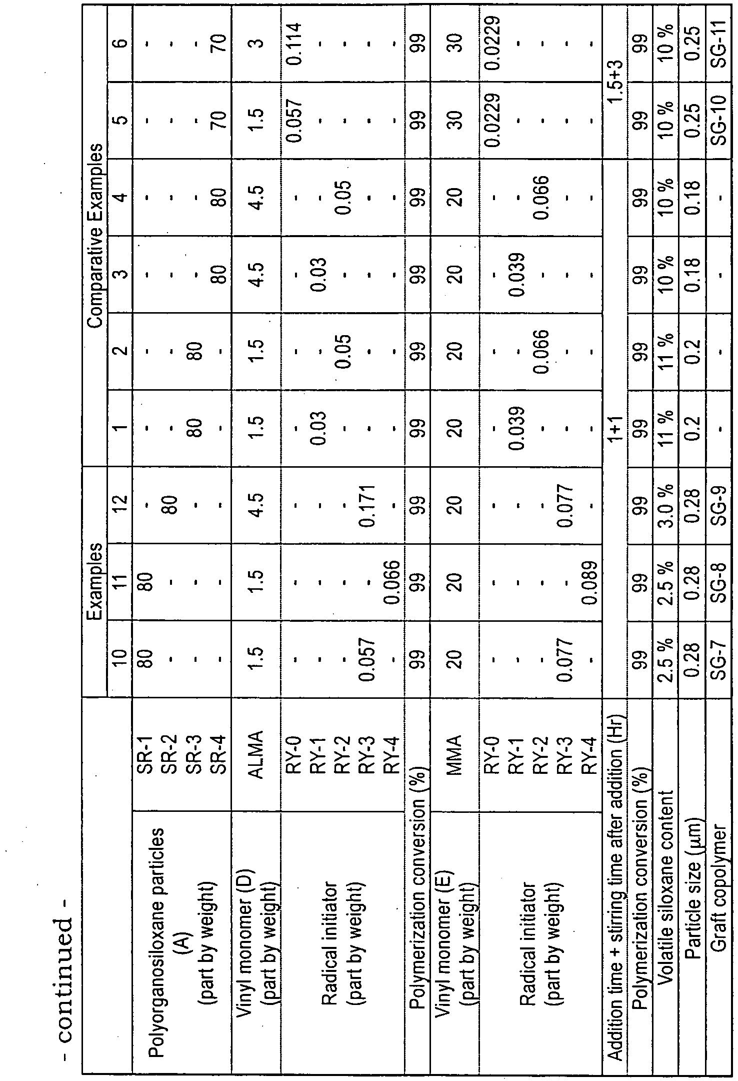

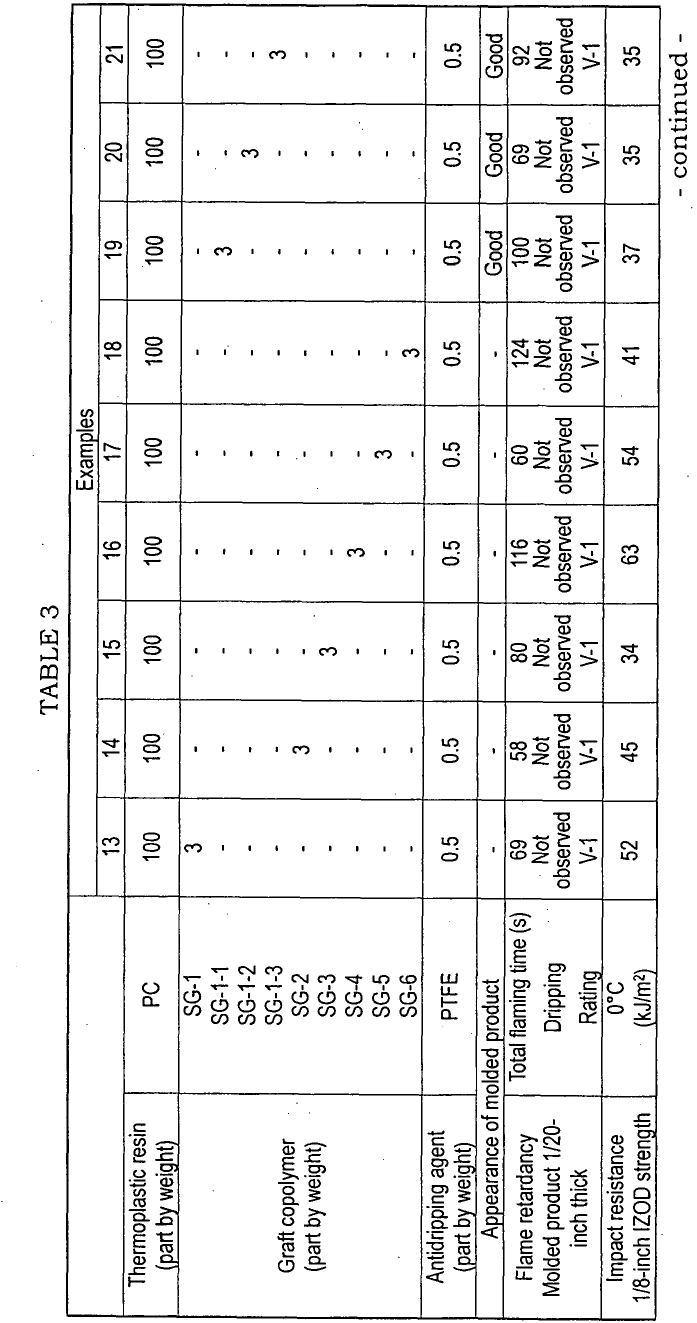

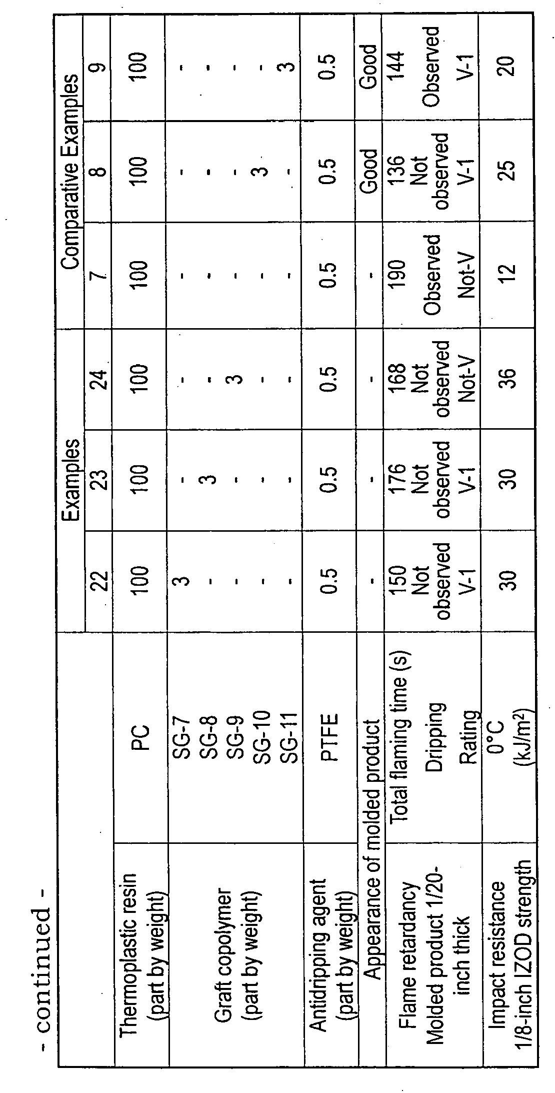

### INDUSTRIAL APPLICABILITY

Examples of applications of a molded product obtained from a flame-retardant resin composition according to the present invention include, but are not limited to, in particular, components or housings, which require flame retardancy, for desktop computers, laptop computers, tower computers, server computers, printers, and copying machines.

## Claims

1. A polyorganosiloxane-containing graft copolymer prepared by polymerizing 0.5 to 10 parts by weight of a vinyl monomer (D) comprising 100 to 50 percent by weight of a polyfunctional monomer (B) containing at least two polymerizable unsaturated bonds and 0 to 50 percent by weight of another copolymerizable monomer (C) in the presence of 30 to 95 parts by weight of a polyorganosiloxane (A) in a latex form prepared by emulsion polymerization of a linear or branched siloxane having a terminal group selected from a hydroxyl group, an amino group, and a hydrolyzable group using a graft-linking agent; and further polymerizing 5 to 70 parts by weight of a vinyl monomer (E) (the sum of (A), (D), and (E) being 100 parts by weight), wherein a radical initiator (F) having a solubility to water of 0.5 g/100 g (20°C) or more is used in polymerizing the (D) and/or the (E).

2. The polyorganosiloxane-containing graft copolymer according to Claim 1, wherein the amount of the vinyl monomer (D) is 0.5 to 5 parts by weight.

3. The polyorganosiloxane-containing graft copolymer according to Claim 1 or 2, wherein the vinyl monomer (E) is at least one monomer selected from the group consisting of an aromatic vinyl monomer, a vinyl cyanide monomer, a (meth)acrylate monomer, and a carboxyl group-containing vinyl monomer.

4. A flame retardant comprising the polyorganosiloxane-containing graft copolymer according to any one of Claims 1 to 3.

5. A resin composition comprising 0.1 to 20 parts by weight of the flame retardant according to Claim 4 per 100 parts by weight of a thermoplastic resin.

## Patentansprüche

1. Ein Polyorganosiloxan enthaltendes Propf-Copolymer, welches durch Polymerisation von 0,5 bis 10 Gewichtsteilen eines Vinyl-Monomers (D), welches 100 bis 50 Gewichtsprozent eines polyfunktionalen Monomers (B) umfasst, welches mindestens zwei polymerisierbare ungesättigte Bindungen und 0 bis 50 Gewichtsprozent eines anderen copolymerisierbaren Monomers (C) enthält, in Anwesenheit von 30 bis 95 Gewichtsteilen eines Polyorganosiloxans (A) in Latexform, welches über Emulsionspolymerisation eines linearen oder verzweigten Siloxans mit einer terminalen Gruppe ausgewählt aus einer Hydroxylgruppe, einer Aminogruppe, und einer hydrolysierbaren Gruppe unter Benutzung eines Propfbindungsmittels hergestellt wird; und weiter Polymerisation von 5 bis 70 Gewichtsteilen eines Vinyl-Monomers (E) (die Summe aus (A), (D), und (E) sei 100 Gewichtsprozent), wobei ein Radikalstarter (F) mit einer Löslichkeit in Wasser von 0,5 g/100 g (20 °C) oder mehr zur Polymerisation von (D) und/oder (E) benutzt wird.

2. Das Polyorganosiloxan enthaltende Propf-Copolymer gemäß Anspruch 1, wobei die Menge des Vinyl-Monomers (D) 0,5 bis 5 Gewichtsteile beträgt.

3. Das Polyorganosiloxan enthaltende Propf-Copolymer gemäß Anspruch 1 oder 2, wobei das Vinyl-Monomer (E) mindestens ein Monomer ist, ausgewählt aus einer Gruppe bestehend aus einem aromatischen Vinyl-Monomer, einem Vinyl-Cyanid-Monomer, einem (Meth)acrylat-Monomer, und einem eine Carboxyl-Gruppe enthaltenden Vinyl-Monomer.

4. Ein Flammschutzmittel, welches das Polysiloxan enthaltende Propf-Copolymer gemäß einem der Ansprüche 1 bis 3 umfasst.

5. Eine Harzzusammensetzung, welche 0,1 bis 20 Gewichtsteile des Flammschutzmittels gemäß Anspruch 4, bezogen auf 100 Gewichtsteile eines thermoplastischen Harzes, umfasst.

## Revendications

1. Copolymère greffé contenant un polyorganosiloxane préparé par la polymérisation de 0,5 à 10 parties en poids d'un monomère de vinyle (D) comprenant 100 à 50 pour cent en poids d'un monomère polyfonctionnel (B) contenant au moins deux liaisons insaturées polymérisables et 0 à 50 pour cent en poids d'un autre monomère copolymérisable (C) en présence de 30 à 95 parties en poids d'un polyorganosiloxane (A) sous forme de latex préparé par la polymérisation en émulsion d'un siloxane linéaire ou ramifié ayant un groupe terminal sélectionné parmi un groupe hydroxyle, un groupe amino, et un groupe hydrolysable en utilisant un agent de greffage ; et en outre la polymérisation de 5 à 70 parties en poids d'un monomère de vinyle (E) (la somme de (A), (D), et (E) étant de 100 parties en poids), dans lequel un initiateur de radicaux (F) ayant une solubilité dans l'eau de 0,5 g/100 g (20°C) ou plus est utilisé dans la polymérisation du (D) et/ou du (E).

2. Copolymère greffé contenant un polyorganosiloxane selon la revendication 1, dans lequel la quantité du monomère de vinyle (D) est de 0,5 à 5 parties en poids.

3. Copolymère greffé contenant un polyorganosiloxane selon la revendication 1 ou 2, dans lequel le monomère de vinyle (E) est au moins un monomère sélectionné dans le groupe constitué d'un monomère de vinyle aromatique, d'un monomère de cyanure de vinyle, d'un monomère de (méth)acrylate, et d'un monomère de vinyle contenant un groupe carboxyle.

4. Ignifuge comprenant le copolymère greffé contenant un polyorganosiloxane selon l'une quelconque des revendications 1 à 3.

5. Composition de résine comprenant 0,1 à 20 parties en poids de l'ignifuge selon la revendication 4 pour 100 parties en poids d'une résine thermoplastique.
